# FASCICULE DE BREVET EUROPEEN

(11) **EP 2 810 875 B1**
(45) Date de publication et mention de la délivrance du brevet: **17.01.2018**
(21) Numéro de dépôt: 14171577.1
(22) Date de dépôt: 06.06.2014
(51) Int. Cl.: B64G 1/40, B64G 1/28, B64G 1/26, B64G 1/24, B64G 1/10

(54) **Système de propulsion en deux modules pour contrôle d'orbite et contrôle d'attitude de satellite**
Bimodulares Antriebssystem für Orbit- und Fluglageregelung eines Satelliten
Bi-modular propulsion system for orbit and attitude control of a satellite

(30) Priorité: 07.06.2013 FR 1301302
(43) Date de publication de la demande: 10.12.2014
(73) Titulaire: Thales, 92400 Courbevoie (FR)
(72) Inventeur: Celerier, Bruno, 31100 TOULOUSE (FR)
(74) Mandataire: Collet, Alain

(56) Documents cités:
- EP-A1- 0 780 299
- EP-A1- 0 799 768
- WO-A1-2009/076448
- FR-A1- 2 365 154
- NL-C2- 1 032 158
- US-A- 3 559 919
- US-A1- 2005 040 282

## Description

La présente invention concerne le domaine des systèmes de contrôle d'orbite et le contrôle d'attitude de satellite, et plus particulièrement l'architecture des systèmes de propulsion embarqués pour le contrôle d'orbite de satellites géostationnaires de télécommunications.

Pour permettre l'utilisation des divers instruments de mission d'un satellite, tels que des systèmes de télécommunications, il convient de pouvoir contrôler la position et l'orientation du satellite en orbite. Pour cela, des systèmes de contrôle sont mis en oeuvre pour maintenir d'une part l'orientation du satellite par rapport à la terre, c'est le contrôle d'attitude, et d'autre part sa position en orbite par rapport à une position idéale souhaitée, c'est le contrôle d'orbite. Par exemple dans le cas des satellites géostationnaires, le contrôle d'orbite cherche à limiter l'inclinaison par rapport au plan équatorial, à limiter l'excentricité de l'orbite, et à limiter la dérive de la position longitudinale du satellite par rapport à la terre. Pour cela, des propulseurs sont positionnés en divers emplacements sur le satellite pour corriger la trajectoire à intervalle plus ou moins proche en appliquant une force sur le satellite. Ces opérations de maintien à poste nécessitent de pouvoir disposer d'une réserve de carburant suffisante tout au long de la vie du satellite.

Un satellite est mis en orbite par la combinaison d'un véhicule spatial lanceur et de ses propres systèmes de propulsion. Le lanceur transporte et libére le satellite sur une première orbite terrestre dite de transfert, dont le perigée est généralement bas ; une fois sur cette première orbite, un système de propulsion du satellite prend le relais pour transporter le satellite jusqu'à son orbite finale. Généralement, ce transfert est réalisé au moyen d'un propulseur satellite principal PSP consommant un carburant chimique de type ergol ou propergol, délivrant une poussée de forte puissance permettant d'atteindre rapidement l'orbite finale.

Une fois mis en station, plusieurs propulseurs secondaires de plus faibles puissances assurent le maintien en position du satellite sur l'orbite. Pour cela, des propulseurs chimiques à ergol ou des propulseurs électriques peuvent être utilisés. Dans un propulseur électrique, de type propulseur à plasma, ou propulseur à ions, des atomes de xénon sont ionisés par collision avec des électrons, créant des ions xénons. La poussée est générée lorsque les ions xénons chargés sont accélérés hors du propulseur par un champ électromagnétique. Bien que coûteux et de masse initiale importante, l'efficacité du propulseur, ou sa capacité à générer de la force par éjection de masse, aussi appelée impulsion spécifique, est sensiblement plus importante que celle des propulseurs chimiques.

Dans les systèmes connus, des propulseurs chimiques et des propulseurs électriques sont positionnés en plusieurs emplacements sur la structure du satellite pour répondre à l'ensemble des besoins de la mission, du transport de l'orbite de transfert au maintien en orbite tout au long de la vie du satellite. Les systèmes de propulsion ainsi mis en oeuvre ont pour inconvénient un coût élevé et une masse élevée, des différents propulseurs et du carburant. Ces inconvénients limitent la capacité d'embarquement de charge utile du satellite.

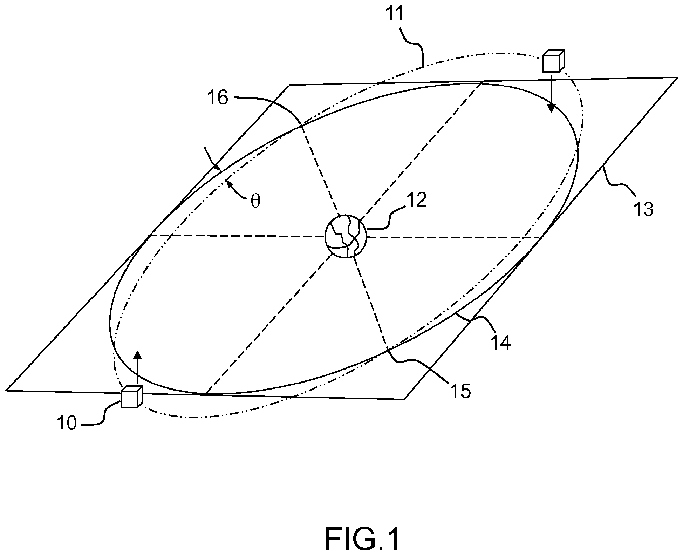

Selon l'état connu de la technique, un système de contrôle d'orbite cherche à piloter la position du satellite au travers de six paramètres orbitaux. La figure 1 représente un satellite géostationnaire 10 en orbite 11 autour de la terre 12. L'orbite 11 est inclinée d'un angle 0 par rapport au plan équatorial 13 qui contient l'orbite géostationnaire idéale 14. L'orbite 11 du satellite coupe le plan équatorial 13 en deux points 15 et 16, couramment appelés noeuds orbitaux. On connaît aussi les six paramètres orbitaux utilisés pour qualifier la position d'un satellite : le demi grand-axe, l'excentricité, l'inclinaison, l'argument du noeud ascendant, l'argument du perigee, et l'anomalie vraie. Le contrôle d'orbite consiste à quantifier ces paramètres orbitaux et à réaliser les opérations nécessaires au moyen des systèmes de propulsion embarqués, pour maintenir le satellite dans une zone prédéfinie autour d'une position idéale. A titre d'exemple, pour un satellite géostationnaire, une fenêtre de dérive de plus ou moins 0,1°, représentant une largeur de presque 150km, est attribuée autour d'une position cible.

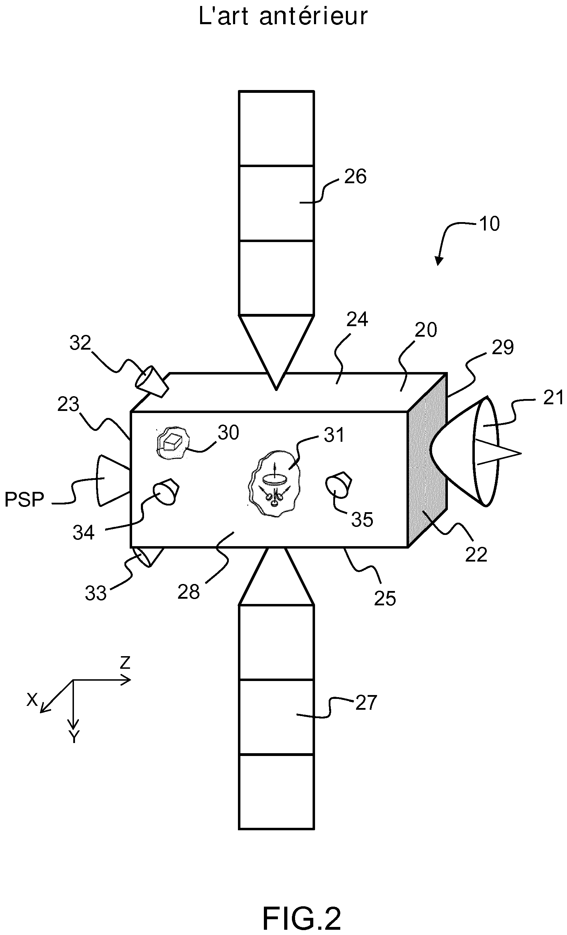

Une architecture courante d'un satellite 10, telle que représentée sur la figure 2, comprend une structure parallélépipédique 20 sur laquelle sont fixés divers dispositifs utiles au pilotage du satellite 10 et à sa mission. Des instruments de télécommunications 21 sont installés sur une face 22 dont l'orientation est maintenue en direction de la terre, communément appelée face terre. Sur une face opposée 23, communément appelée face anti-terre est positionné le propulseur satellite principal PSP qui assure notamment la poussée nécessaire au transfert de l'orbite basse vers l'orbite finale. Sur deux faces latérales opposées 24 et 25, communément appelées face Nord et face Sud, en raison de leur orientation par rapport au plan équatorial, sont positionnés deux jeux de panneaux solaires 26 et 27 permettant l'alimentation en énergie électrique des systèmes embarqués. Divers dispositifs peuvent être embarqués sur les faces latérales 28 et 29, communément appelés face Est et Ouest pour leur orientation par rapport à une longitude terrestre. Le maintien d'une orientation constante du satellite par rapport à la terre est nécessaire au bon déroulement de la mission du satellite, par exemple pour l'orientation des panneaux solaires 26 et 27 ou le pointage des systèmes de telecommunications 21 vers la terre. Cela est réalisé au moyen d'un système de contrôle d'attitude. On connaît plusieurs systèmes de contrôle d'attitude aptes à détecter et corriger les erreurs d'orientation. Ainsi, la mesure de l'orientation du satellite peut être réalisée au moyen d'un ensemble de capteur, comprenant par exemple un capteur dirigé vers la terre, positionné en face terre pour une mesure sur deux axes, tangage et roulis, par rapport à la terre et un ensemble 30 de gyroscopes pour une détection des vitesses de rotation sur trois axes. A partir de ces mesures, des corrections d'orientation du satellite autour de son centre de gravité peuvent être réalisées, par exemple au moyen d'un ensemble de roues à inertie 31 ou d'actionneurs gyroscopiques.

Un satellite équipé d'un tel système permettant le contrôle d'attitude est dit stabilisé sur trois axes. Typiquement, en contrôlant la vitesse de rotation et l'orientation des roues à inertie, on sait corriger une erreur d'orientation dans un trièdre de référence lié au satellite. Dans la suite, on appelle Z un axe dirigé vers la terre, aussi appelé axe de lacet, Y un axe perpendiculaire à l'orbite et orienté dans le sens opposé au moment cinétique de l'orbite (vers le sud pour un geostationnaire), aussi appelé axe de tangage, et X un axe formant avec Y et Z un repère orthogonal direct, aussi appelé axe de roulis qui se trouve orienté selon la vitesse dans le cas des orbites circulaires.

Pour le contrôle d'orbite, plusieurs propulseurs sont disposés sur la structure 20 du satellite 10. Un premier propulseur de forte puissance PSP, permettant d'assurer le transfert entre l'orbite terrestre initiale (après libération du lanceur) et l'orbite finale, est positionné sur la face anti-terre 23. Selon un état connu de la technique, un premier ensemble de propulseurs, comprenant par exemple deux propulseurs 32 et 33 positionnés en face Nord et en face Sud à proximité de la face anti-terre, est utilisé pour contrôler l'inclinaison. Un second ensemble de propulseurs, comme par exemple les propulseurs 34 et 35, positionné en faces Est et Ouest, est utilisé pour le contrôle de l'excentricité et la dérive. On sait aussi que le contrôle de l'inclinaison requiert de l'ordre de cinq à dix fois plus de carburant que le contrôle de l'excentricité et de la dérive. Pour cette raison, le contrôle en inclinaison est en général réalisé au moyen de propulseur à plasma, plus faiblement consommateur de carburant, tandis que les propulseurs dédiés au contrôle de l'excentricité et de la dérive sont le plus souvent à ergol chimique.

A titre d'exemple, un satellite courant de masse sèche 2500kg et permettant d'embarquer une charge utile de 900 kg, comprend un propulseur principal, deux propulseurs à plasma pour l'inclinaison et l'excentricité, et quatre propulseurs à ergol pour l'excentricité et la dérive. Typiquement, 1700kg d'ergol sont nécessaires pour le transfert initial d'orbite, et 220kg de Xénon sont nécessaires pour assurer le contrôle d'orbite du satellite pendant une durée de mission d'environ 15 ans. Ainsi, le coût et la masse des systèmes de propulsion actuels limitent la capacité à embarquer une charge utile élevée. Notons aussi que dans la plupart des systèmes connus de propulsion pour contrôle d'orbite, les différents propulseurs embarqués comprennent en réalité deux moteurs propulsifs positionnés côte à côte, pour des raisons de sécurité et de fiabilité de la mission. Cette redondance, bien connue de l'homme du métier, n'est pas représentée sur les figures mais on considère dans la suite qu'un propulseur peut être constitué d'un ou plusieurs moteurs propulsifs formant un ensemble propulsif, et dont la poussée qui peut être délivrée est identique, en orientation ou en intensité.

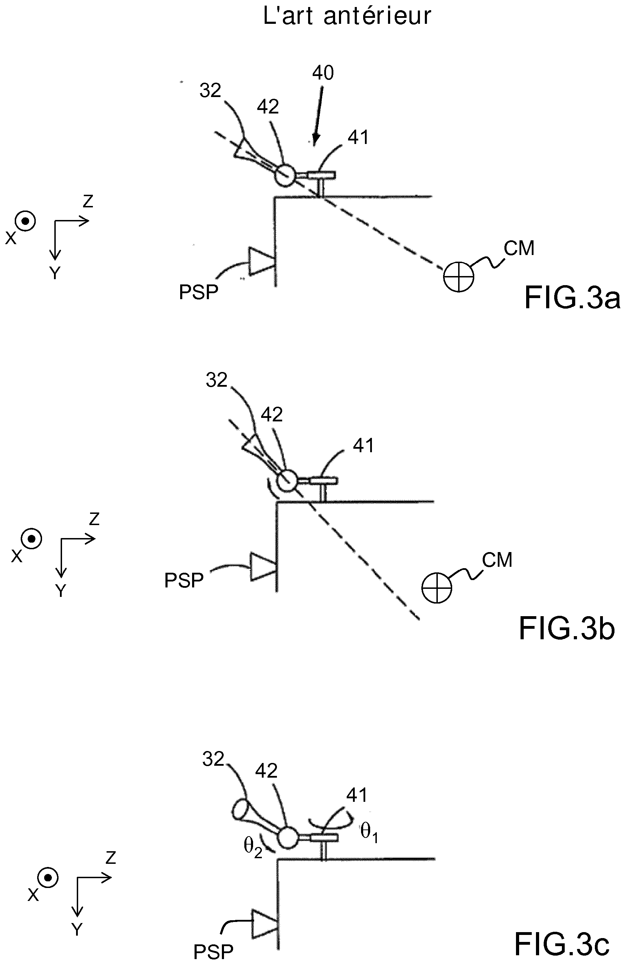

Les figures 3a, 3b et 3c illustrent le principe du contrôle d'orbite pour un satellite selon l'état connu de la technique. La structure 20 du satellite 10 est représentée en vue de côté, la face Est étant visible. Le propulseur 32 est relié à la face Nord de la structure 20 au moyen d'un mécanisme deux axes 40. Le mécanisme deux axes 40 permet la rotation du propulseur 32 par rapport à la structure 20 selon un premier axe parallèle à l'axe Y et un second axe parallèle à l'axe X. Sur les figures 3a à 3c, le mécanisme deux axes 40 est une liaison cardan réalisée au moyen d'une première liaison pivot 41 d'axe parallèle à l'axe Y et une seconde laison pivot 42 d'axe parallèle à l'axe X. Le centre de masse du satellite, situé à l'intérieur de la structure parallélépipédique 20, est référencé CM.

Sur la figure 3a, l'orientation du propulseur 32 permet de diriger la poussée du propulseur vers le centre de masse CM du satellite. Pour effectuer une manoeuvre de correction d'inclinaison, une technique connue de l'homme du métier consiste à allumer le propulseur 32 une première fois à proximité d'un noeud orbital, par exemple 15, puis le propulseur du côté opposé une seconde fois à proximité du noeud orbital opposé, 16 dans l'exemple. Ainsi, la poussée du premier allumage du propulseur 32, orientée vers le centre de masse CM, déplace le satellite dans une direction ayant une composante en Z et une composante en Y. Douze heures après, la poussée du second allumage au noeud orbital opposé, déplace le satellite dans une direction ayant une composante en Z opposée au premier allumage, et qui vient en compenser l'effet non recherché sur l'excentricité et une composante également opposée en Y mais dont les effets recherchés en inclinaison se cumulent. Ainsi, deux allumages d'intensités égales réalisés à douze heures d'intervalle à proximité des noeuds orbitaux 15 et 16 permettent d'annuler l'effet de la composante radiale pour ne conserver qu'une correction Nord-Sud. Cette procédure connue permet une correction quotidienne de l'inclinaison.

Par cette même technique il est aussi possible, en appliquant une seconde poussée d'intensité différente de la première, d'appliquer des corrections d'excentricité selon un axe perpendiculaire à la ligne joignant les deux noeuds orbitaux 15 et 16. Des techniques ont aussi été développées pour permettre des corrections d'excentricité selon un second axe, en décalant l'allumage du propulseur par rapport au noeud orbital, mais au prix d'une moins bonne efficacité du contrôle de l'inclinaison. En résumé, les systèmes connus permettent au moyen de deux systèmes de propulseur 32 et 33 d'assurer le contrôle de l'inclinaison et le contrôle de l'excentricité selon un axe sans désoptimisation du contrôle d'inclinaison, ou d'assurer le contrôle de l'inclinaison et le contrôle de l'excentricité selon deux axes avec désoptimisation du contrôle d'inclinaison. Le contrôle de la dérive ne peut être réalisé par ces deux propulseurs. Un satellite courant comprend pour cela quatre tuyères à ergol chimique positionnées sur les faces Est et Ouest du satellite.

Les systèmes de propulseur 32 et 33 sont également utiles pour gérer la quantité de mouvement des systèmes de contrôle d'attitude, comme illustré sur les figures 3b et 3c. En appliquant une poussée hors du centre de masse CM - dans un plan Y-Z sur la figure 3b et hors du plan Y-Z sur la figure 3c, on génère un couple de rotation sur le satellite - un couple de roulis sur la figure 3b et un couple de tangage et lacet sur la figure 3c. Ces deux couples peuvent être utilisés pour charger ou décharger les roues à inertie selon deux axes. Par exemple, lorsque la vitesse de rotation d'une roue à inertie atteint sa vitesse limite, on cherchera à orienter la poussée volontairement hors du centre de masse CM de façon a générer, en plus du déplacement souhaité du satellite, un couple permettant de désaturer la roue à inertie, ou plus généralement, le problème sera anticipé en ramenant le moment cinétique à des valeurs voulues à l'occasion de chaque maneuvre. Ces valeurs voulues pouvant bien entendu être nulles, mais aussi une valeur définie judicieusement de manière à anticiper l'évolution du moment cinétique entre deux maneuvres sous l'effet de la pression de radiation solaire notamment.

Notons aussi que le centre de masse du satellite varie au cours de la vie du satellite, notamment en raison de la consommation progressive du carburant embarqué. Dans les systèmes connus, des algorithmes sont mis en oeuvre pour la gestion combinée du contrôle d'attitude et du contrôle d'orbite, et pour permettre de prendre en compte la position du centre de masse CM tout au long de la vie du satellite. En outre, on connaît le document NL 1,032,158 C2, qui est considéré comme l'art antérieur le plus proche et décrit les caractéristiques du préambule de la revendication 1. On comprend donc l'enjeu de pouvoir disposer de systèmes de propulsion efficaces. Les solutions actuelles, qui mettent en oeuvre des propulseurs de nature différentes en divers emplacements du satellite sont relativement complexes, honéreuses et présentent une masse élevée qui limite la capacité d'embarquement du satellite.

L'invention vise à proposer une solution alternative pour le contrôle de l'orbite et la réalisation des couples à exercer sur le satellite pendant les maneuvres en palliant les difficultés de mise en oeuvre citées ci-dessus.

A cet effet, l'invention a pour objet un système de propulsion pour le contrôle d'orbite d'un satellite à orbite terrestre animé d'une vitesse de déplacement selon un axe V tangentiel à l'orbite, caractérisé en ce qu'il comprend deux modules de propulsion, fixés au satellite, et en regard l'un de l'autre par rapport au plan de l'orbite,
chacun des modules de propulsion comprenant successivement :
- une liaison motorisée de rotation autour d'un axe parallèle à l'axe V,
- un bras de déport, et
- une platine supportant deux propulseurs, aptes à délivrer une poussée selon des axes de poussée respectifs, disposés sur la platine de part et d'autre d'un plan P perpendiculaire à l'axe V passant par un centre de masse CM du satellite ; chacun des deux propulseurs étant orienté de façon à ce que les axes de poussées des deux propulseurs soient parallèles entre eux et perpendiculaires à l'axe V.

Avantageusement, les deux propulseurs de chacun des modules de propulsion, sont disposés sur la platine sensiblement à égales distances du plan P.

Avantageusement, chacun des deux propulseurs principaux de chacun des deux modules de propulsion, comprend un propulseur de redondance disposé sur la platine à proximité dudit propulseur principal, et de façon à ce que son axe de poussée soit contenu dans un plan parallèle au plan P et contenant l'axe de poussée dudit propulseur principal.

Avantageusement, chacun des deux propulseurs principaux de chacun des deux modules de propulsion, comprend un propulseur de redondance disposé sur la platine à proximité dudit propulseur principal, et de façon à ce que son axe de poussée soit contenu dans un plan contenant les axes de poussée des deux propulseurs principaux.

Avantageusement, la liaison motorisée de chacun des deux modules de propulsion permet la rotation de la platine entre :
- une position de stockage, adaptée au lancement du satellite ; le bras de déport dudit module de propulsion étant maintenu contre le satellite, et
- une position opérationnelle, configurée de façon à ce que le plan contenant les axes de poussées des deux propulseurs dudit module de propulsion passe à proximité du centre de masse CM du satellite.

Avantageusement, chacun des deux modules de propulsion comprend également, entre le bras de déport et la platine dudit module de propulsion, une seconde liaison motorisée de rotation autour d'un axe T perpendiculaire à la fois à l'axe V et aux axes de poussée des deux propulseurs dudit module de propulsion.

Avantageusement, chacun des deux modules de propulsion comprend également, entre la seconde liaison motorisée et la platine, un second bras de déport.

L'invention porte aussi sur un satellite à orbite terrestre muni d'un système de propulsion ayant les caractéristiques précédemment décrites.

L'invention porte également sur un procédé pour le contrôle d'inclinaison d'un satellite en orbite géostationnaire selon la revendication 11 comprenant un système de propulsion ayant les caractéristiques précédemment décrites, et comprenant des étapes consistant à :
- déplacer un premier module de propulsion, au moyen de sa liaison motorisée, de façon à ce que le plan contenant les axes de poussées de ses deux propulseurs passe à proximité du centre de masse CM du satellite,
- activer simultanément les deux propulseurs dudit premier module à proximité d'un premier noeud orbital,
- déplacer le second module de propulsion opposé, au moyen de sa liaison motorisée, de façon à ce que le plan contenant les axes de poussées de ses deux propulseurs passe à proximité du centre de masse du satellite,
- activer simultanément les deux propulseurs dudit second module à proximité d'un second noeud orbital, opposé au premier noeud orbital.

L'invention porte aussi sur un procédé pour le transfert d'orbite d'un satellite selon la revendication 12 comprenant un système de propulsion ayant les caractéristiques précédemment décrites, et comprenant des étapes consistant à :
- pour chacun des deux modules de propulsion, orienter les propulseurs, au moyen de la liaison motorisée, de façon à ce que le plan contenant les axes de poussées des propulseurs soit parallèle au plan de l'orbite,
- activer simultanément les propulseurs des deux modules de propulsion.

L'invention porte également sur un procédé de contrôle de moment cinétique d'un satellite selon la revendication 13 comprenant un dispositif d'accumulation de moment cinétique et un système de propulsion selon l'une des revendications 1 à 9, caractérisé en ce qu'il comprend des étapes consistant à :
- orienter les propulseurs (54a, 54b) des deux modules de propulsion (50a, 50b) d'au moins un ensemble de propulsion (100) au moyen de leur liaison motorisée (51a) dans une même position angulaire,
- activer simultanément les deux propulseurs (54a, 54b) ainsi orientés, de manière à générer sur le satellite un couple autour de l'axe V.

L'invention porte aussi sur un procédé pour le contrôle du moment cinétique d'un satellite selon la revendication 14 comprenant un dispositif d'accumulation de moment cinétique et un système de propulsion ayant les caractéristiques précédemment décrites, et comprenant des étapes consistant à :
- orienter les propulseurs d'au moins un module de propulsion au moyen de la liaison motorisée dudit module,
- activer les deux propulseurs dudit module de manière différentielle, en intensité ou en durée, de manière à générer un couple sur le satellite,
le couple ainsi généré autour de l'axe perpendiculaire à la fois à l'axe V et aux deux axes de poussée des deux propulseurs pouvant limiter ou résorber le moment cinétique absorbé par le dispositif d'accumulation de moment cinétique du satellite.

L'invention porte également sur un procédé de contrôle de moment cinétique d'un satellite selon la revendication 15 comprenant un dispositif d'accumulation de moment cinétique et un système de propulsion selon l'une des revendications 1 à 9, caractérisé en ce qu'il comprend des étapes consistant à :
- orienter les propulseurs (54a, 55a) d'au moins un module de propulsion (50a) au moyen de la liaison motorisée (51a) et/ou (70a) dudit module de propulsion (50a),
- activer les deux propulseurs (54a, 55a) dudit module de propulsion (50a) de manière différentielle, en intensité ou en durée, de manière à générer sur le satellite (10) un couple autour de l'axe perpendiculaire à la fois à l'axe V et aux deux axes de poussée des deux propulseurs (54a , 55a),
le couple ainsi généré limitant ou résorbant le moment cinétique absorbé par le dispositif d'accumulation de moment cinétique du satellite (10), et la force selon l'axe X contribuant à contrôler le mouvement du satellite dans le plan de son orbite.

L'invention sera mieux comprise et d'autres avantages apparaîtront à la lecture de la description détaillée des modes de réalisation donnés à titre d'exemple sur les figures suivantes.
La figure 1, déjà présentée, représente un satellite géostationnaire en orbite autour de la terre,
la figure 2, déjà présentée, représente une architecture courante d'un satellite comprenant une structure sur laquelle sont fixés divers dispositifs utiles au pilotage du satellite et à sa mission,
les figures 3a, 3b et 3c, déjà présentées, illustrent le principe du contrôle d'orbite pour un satellite selon l'état connu de la technique,
les figures 4a, 4b et 4c représentent un premier mode de réalisation du système de propulsion respectivement en position de stockage, en position de transfert d'orbite et en position opérationnelle,
les figures 5a et 5b représentent un second mode de réalisation du système de propulsion respectivement en position de stockage et en position opérationnelle,
les figures 6a, 6b et 6c représentent un troisième mode de réalisation du système de propulsion,
les figures 7a et 7b représentent un quatrième mode de réalisation du système de propulsion,
les figures 8a et 8b illustrent par une vue plus détaillée le second mode de réalisation du système de propulsion respectivement en position de stockage et en position opérationnelle.

Par souci de clarté, les mêmes éléments porteront les mêmes repères dans les différentes figures.

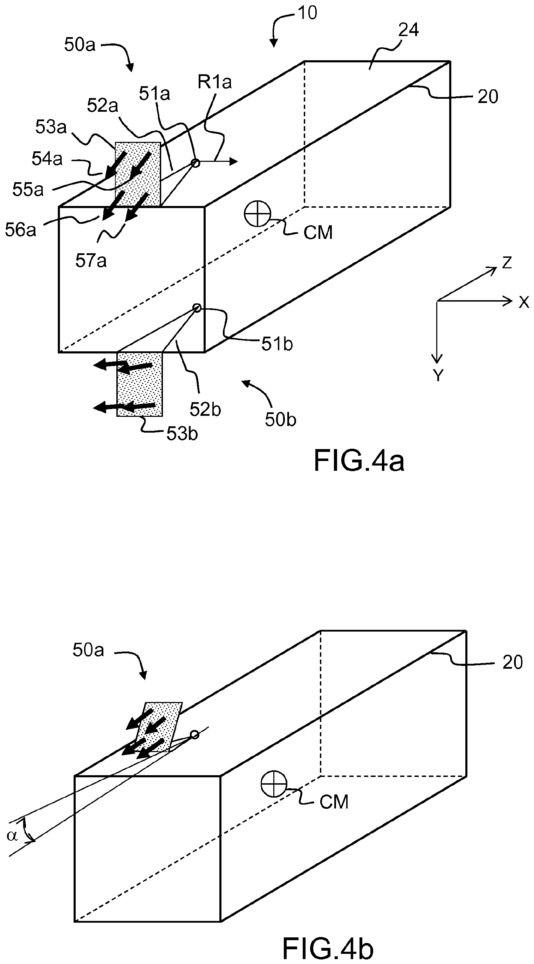

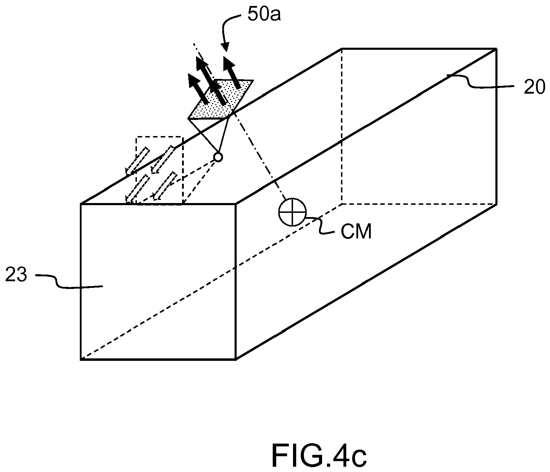

Les figures 4a, 4b et 4c représentent un premier mode de réalisation du système de propulsion respectivement en position de stockage, en position de transfert d'orbite et en position opérationnelle. Comme précédemment décrit, un satellite 10 en orbite 11 est stabilisé sur trois axes d'un trièdre de référence lié au satellite au moyen d'un système de contrôle d'attitude. Le trièdre de référence comprend un axe Z orienté vers la terre, un axe Y perpendiculaire à l'obite et orienté dans le sens opposé au moment cinétique de la rotation orbitale, et un axe X formant avec les axes Y et Z un repère orthogonal direct. L'axe X se trouve orienté dans la direction de la vitesse du satellite en orbite 11 autour de la terre 12. Le satellite 10 comprend une structure parallélépipédique 20 dont deux faces 22 et 23, dites face terre et face anti-terre, sont perpendiculaires à l'axe Z et orientées respectivement vers la terre et vers une direction opposée à la terre, et deux faces adjacentes opposées 24 et 25, dite face nord et face sud, sont perpendiculaires à l'axe Y et orientées respectivement vers le nord et le sud dans le champ magnétique terrestre. On note aussi un centre de masse CM du satellite, dont la position varie légèrement au cours de la vie du satellite, et situé à l'intérieur de la structure 20.

Pour des raisons de clarté, la description de l'invention s'appuie sur le repère formé par les axes X, Y et Z et sur un satellite dont la structure 20 est parallélépipédique. L'invention ne se limite en aucune manière à un satellite dont la structure 20 est parallélépipédique, ni à un satellite stabilisé sur les trois axes X, Y et Z. Elle s'étend d'une manière générale à tout satellite 10 à orbite terrestre 11 disposant d'une capacité d'accumulation de moment cinétique, animé d'une vitesse de déplacement tangentielle à l'orbite terrestre 11. Dans la suite, l'axe de la vitesse est référencé axe V ; il est confondu avec l'axe X dans le cas particulier représenté sur les figures d'un satellite en orbite circulaire.

Dans le premier mode de réalisation décrit par les figures 4a, 4b et 4c, le système de propulsion comprend deux modules de propulsion 50a et 50b fixés au satellite 10, et disposés en regard l'un de l'autre par rapport au plan de l'orbite 11. Dans le cas d'un satellite comprenant une structure parallélépipédique 20 comme représenté sur les figures, les modules de propulsion 50a et 50b sont fixés au satellite 10 respectivement par l'intermédiaire des faces nord 24 et sud 25.

Les deux modules de propulsion 50a et 50b présentent une architecture identique. Le module de propulsion 50a fixé en face nord comprend successivement :
- une liaison motorisée 51a de rotation autour d'un axe R1a parallèle à l'axe V,
- un bras de déport 52a, et
- une platine 53a supportant deux propulseurs 54a et 55a, aptes à délivrer une poussée selon un axe propre, schématisé par une flèche sur les figures. Les deux propulseurs 54a et 55a sont disposés sur la platine 53a de part et d'autre d'un plan P perpendiculaire à l'axe V passant par le centre de masse CM du satellite. Chacun des deux propulseurs 54a et 55a est orienté de façon à ce que les axes de poussées des deux propulseurs, schématisés par les flèches sur les figures, soient parallèles entre eux et perpendiculaires à l'axe V.

Dans ce premier mode de réalisation, chacun des deux propulseurs principaux 54a et 55a comprend un propulseur de redondance, respectivement 56a et 57a, disposé sur la platine 53a à proximité dudit propulseur principal, respectivement 54a et 55a, et de façon à ce que son axe de poussée soit contenu dans un plan parallèle au plan P et contenant l'axe de poussée dudit propulseur principal, respectivement 54a et 55a. Dans le cas d'un satellite à orbite circulaire repéré au moyen du trièdre de référence (X, Y, Z), cela signifie que les axes de poussée des quatre propulseurs (deux propulseurs principaux et deux propulseurs de redondance) sont parallèles entre eux et perpendiculaires à l'axe X ; chaque couple propulseur principal / propulseur de redondance étant aligné selon l'axe Y.

De manière analogue, le module de propulsion opposé 50b, fixé en face sud, comprend une liaison motorisée 51b de rotation autour d'un axe parallèle à l'axe V, un bras de déport 52b, et une platine 53b supportant deux propulseurs, aptes à délivrer une poussée selon un axe propre. Les deux propulseurs sont disposés sur la platine 53b de part et d'autre d'un plan P perpendiculaire à l'axe V passant par le centre de masse CM du satellite. Chacun des deux propulseurs est orienté de façon à ce que les axes de poussée des deux propulseurs soient parallèles entre eux et perpendiculaires à l'axe V.

Comme pour le premier module de propulsion 50a, chacun des deux propulseurs du module de propulsion 50b comprend un propulseur de redondance, disposé sur la platine 53b selon les mêmes contraintes géométriques que le premier module 50a.

Pour chacun des modules de propulsion (e.g. 50a), il est avantageux de disposer les deux propulseurs (i.e. 54a et 54b) sur la platine (i.e. 53a) à égales distances du plan de l'orbite. Il est également avantageux, pour chacun des modules de propulsion (e.g. 50a), de disposer les deux propulseurs (i.e. 54a et 54b) sur la platine (i.e. 53a) à égales distances du plan P précédemment défini.

La figure 4a représente les modules de propulsion, respectivement 50a et 50b, dans une position de stockage adaptée au lancement du satellite. Dans cette position, les bras de déport, respectivement 53a et 53b, des modules de propulsion sont maintenus contre le satellite, respectivement contre les faces nord et sud de la structure du satellite.

La figure 4b représente le module de propulsion 50a dans une position intermédiaire adaptée au transfert d'orbite. Dans cette position, le bras de déport 52a est déplacé au moyen de la liaison motorisée 51a de façon à former un angle a avec l'axe Z ; cet angle a étant défini de manière à ce que les axes de poussée des propulseurs soient parallèles à l'axe Z. Lorsque les deux modules de propulsion sont dans cette position intermédiaire, l'allumage simultané des propulseurs des deux modules de propulsion génère une poussée résultante alignée sur l'axe Z, et au couple équilibré. Ainsi, il est envisagé de solliciter le système de propulsion, par allumage simultané des propulseurs principaux et/ou de redondance des deux modules, pour réaliser le transfert d'orbite, soit en complément du propulseur PSP soit à la place de ce propulseur PSP. Notons par ailleurs qu'il est envisagé de disposer les propulseurs sur la platine de manière à ce que, en position de stockage, les axes de poussées des propulseurs soient parallèles à l'axe Z. Dans ce cas, la position de stockage est adaptée au transfert d'orbite sans nécessiter de déplacement du module de propulsion.

La figure 4c représente le module de propulsion 50a dans une position opérationnelle adaptée au contrôle d'orbite. Dans cette position, le bras de déport 52a et la platine 53a sont déplacés au moyen de la liaison motorisée 51a de façon à ce que le plan contenant les axes de poussées des propulseurs du module 50a passe à proximité du centre de masse CM du satellite.

Ainsi, l'allumage simultané des deux propulseurs 54a et 55a du module de propulsion 50a, résulte en une poussée sur le centre de masse CM, ayant une composante significative selon l'axe Y. On comprend ici un intérêt de la présente invention pour le contrôle d'inclinaison dans le cas où le centre de masse CM du satellite est éloigné de la face anti-terre 23. En effet, les systèmes connus qui disposent de propulseurs à proximité de la face anti-terre génèrent une poussée ne présentant qu'une faible composante selon l'axe Y. Il en résulte une faible efficacité du contrôle d'inclinaison. Les modules de propulsion selon l'invention permettent, par le déplacement des propulseurs déportés sur la platine, et au moyen de la liaison motorisée 51a fixée à distance de la face anti-terre, de générer une poussée ayant une composante selon l'axe Y significativement plus importante. Il en résulte une meilleure efficacité du contrôle d'inclinaison, la quantité de carburant consommé inutilement par la composante selon l'axe X étant réduite.

Avantageusement, le système de propulsion permet également le contrôle du couple autour de deux axes. Typiquement, un allumage différentiel, en intensité ou en durée, des deux propulseurs 54a et 55a orientés en direction du centre de masse, génèrent en plus de l'incrément de vitesse du satellite un couple de tangage et de lacet. De même, l'allumage simultané des deux propulseurs orientés légèrement hors du centre de masse CM, génèrent en plus de l'incrément de vitesse du satellite un couple de roulis autour de l'axe X.

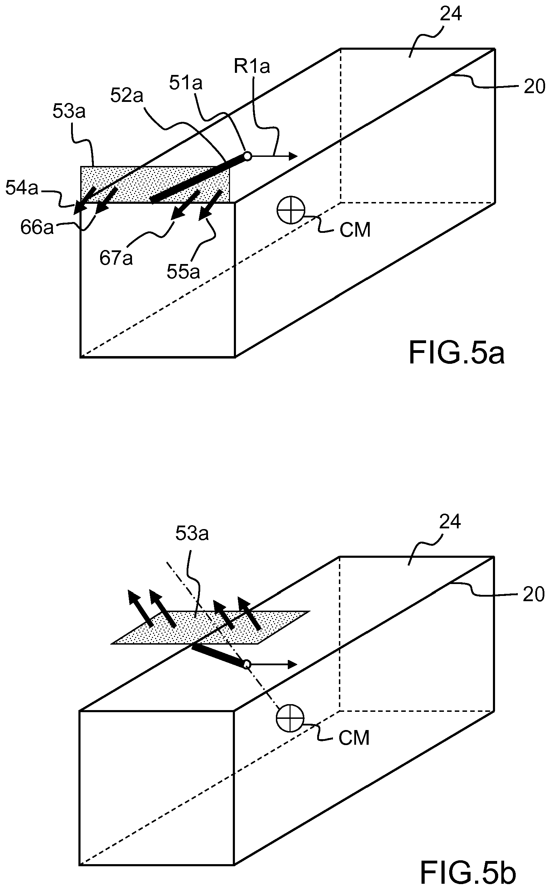

Les figures 5a et 5b représentent un second mode de réalisation du système de propulsion respectivement en position de stockage et en position opérationnelle. Ce second mode de réalisation se différencie du premier mode de réalisation par la disposition des deux propulseurs de redondance associés aux deux propulseurs principaux de chacun des modules de propulsion.

Le système de propulsion comprend donc deux modules de propulsion (un seul est représenté sur les figures 5a et 5b). Chaque module de propulsion comprend une liaison motorisée 51a, un bras de déport 52a et une platine 53a supportant deux propulseurs principaux 54a et 55a représentés sur la figure 5a. Les caractéristiques de ces composants sont identiques à celles du premier mode de réalisation et ne sont pas reprises en détail ici.

Dans ce second mode de réalisation, chacun des deux propulseurs, respectivement 54a et 55a comprend un propulseur de redondance, respectivement 66a et 67a, disposé sur la platine à proximité dudit propulseur principal, respectivement 54a et 55a, et de façon à ce que son axe de poussée soit contenu dans un plan contenant les axes de poussée des deux propulseurs principaux 54a et 55a.

On prévoit la possibilité de ne pas les disposer rigoureusement parallèlement de manière à s'accomoder au mieux des interactions du jet des propulseurs avec les autres constituants du satellite - notamment ses appendices - ou de toute autre contrainte d'aménagement ou d'optimisation de la gestion du moment cinétique via les couples générés.

Dans le cas d'un satellite à orbite circulaire repéré au moyen du trièdre de référence (X, Y, Z) représenté sur les figures, cela signifie que les axes de poussée des quatre propulseurs (deux propulseurs principaux et deux propulseurs de redondance) sont parallèles entre eux et perpendiculaires à l'axe X ; les deux propulseurs de redondance 66a et 67a étant disposés à égales distances du plan P, et entre les deux propulseurs principaux 54a et 55a.

Ces deux premiers modes de réalisation représentés sur les figures 4a, 4b, 4c, 5a et 5c sont particulièrement avantageux. On a en particulier souligné le gain en efficacité du contrôle d'inclinaison. Egalement, ils simplifient les solutions de l'art antérieur en limitant à une liaison de rotation le module de propulsion, contre deux dans l'art antérieur représenté par les figures 3a, 3b et 3c. Pour ce faire, chaque module de propulsion comprend deux propulseurs (quatre propulseurs avec la redondance), contre un propulseur dans l'art antérieur (deux propulseurs avec la redondance). Outre la simplification du mécanisme motorisé, l'ajout de propulseurs permet de disposer d'une force totale supérieure. Cette impulsion plus importante est un avantage significatif dans la phase de transfert d'orbite. Pour chaque module de propulsion, quatre propulseurs peuvent être allumés simultanément.

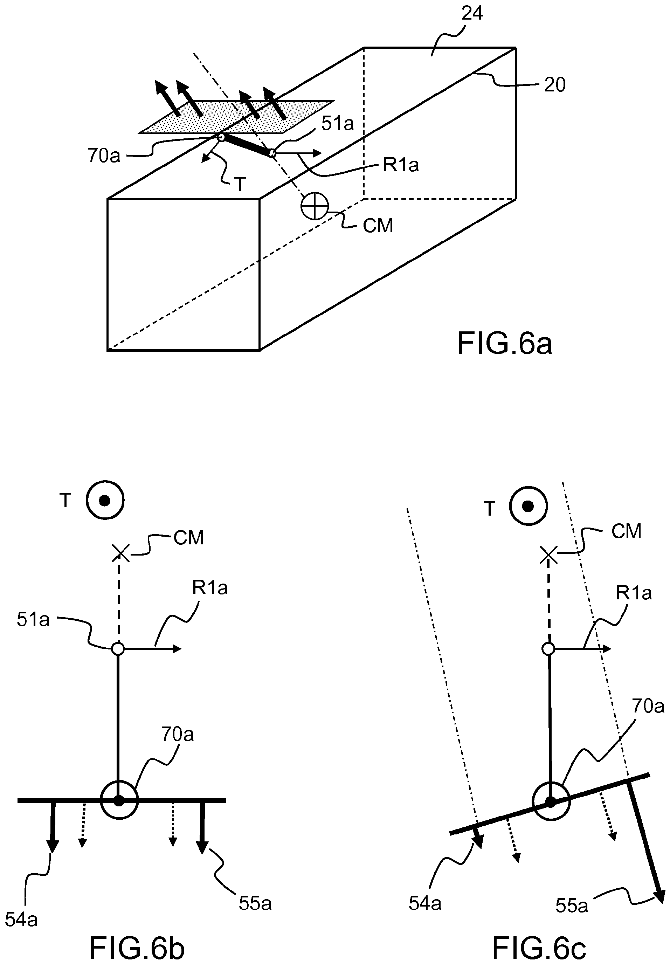

Les figures 6a, 6b et 6c représentent un troisième mode de réalisation du système de propulsion. Ce mode de réalisation ajoute un degré de liberté en rotation au module de propulsion décrit précédemment. Sur les figures 6a, 6b et 6c, le module de propulsion présente une architecture similaire à celle du second mode de réalisation, il comprend quatre propulseurs alignés selon l'axe X. Les mêmes repères désignent les mêmes composants. Cette représentation n'est pas limitative du troisième mode de réalisation selon l'invention. Il est bien sur envisagé selon le même principe l'ajout du degré de liberté en rotation à un module de propulsion présentant une architecture similaire à celle du premier mode de réalisation, i.e. lorsque les propulseurs sont disposés en carré ou en rectangle au lieu d'être alignés.

Ainsi, le système de propulsion selon ce troisième mode de réalisation comprend, pour chacun des deux modules de propulsion, entre le bras de déport 52a et la platine 53a dudit module 50a, une seconde liaison motorisée 70a de rotation autour d'un axe T perpendiculaire à la fois à l'axe V et aux axes de poussées des deux propulseurs 54a et 55a dudit module de propulsion 50a.

La figure 6a représente le module de propulsion en position opérationnelle. Le plan contenant les axes de poussée des propulseurs passe par le centre de masse CM du satellite. La seconde liaison motorisée 70a est dans une position centrée ; les axes de poussée des propulseurs étant alignés sur l'axe Z. C'est également la position du module de propulsion représenté sur la figure 6b. Dans cette vue, le module de propulsion est représenté dans le plan contenant les axes de poussée des propulseurs. Ce plan est perpendiculaire à l'axe T de rotation de la seconde liaison motorisée 70a, il contient l'axe R1a de la première liaison motorisée 51a. Dans cette position centrée de la seconde liaison motorisée, le comportement du module de propulsion est identique à celui décrit pour le seconde mode de réalisation de l'invention. Typiquement, l'allumage simultané des deux propulseurs alignés sur le centre de masse permet un incrément de vitesse présentant une composante importante selon l'axe Y. L'allumage simultané des propulseurs légèrement décalé par rapport au centre de masse permet de générer un couple en X en plus de l'incrément de vitesse ; l'allumage différentiel des propulseurs, permettant de générer en plus un couple selon l'axe T.

La figure 6c représente le module de propulsion selon la même vue dans le plan contenant les axes de poussée des propulseurs, mais ici la platine et les propulseurs ont été déplacés par rotation autour de l'axe T, au moyen de la seconde liaison motorisée 70a. Dans cette position, l'allumage simultané des propulseurs 54a et 55a permet de générer une force présentant une composante selon l'axe de la vitesse, en plus de ses autres composantes. De même, en ajustant un allumage différentiel des deux propulseurs 54a et 55a, en intensité ou en durée, il est possible de conserver cette composante de force selon l'axe de la vitesse tout en maitrisant le couple généré autour de l'axe T. On comprend ici l'intérêt de cette configuration. L'ajout de la seconde liaison motorisée, offrant un nouveau degré de liberté en rotation autour de T, permet le contrôle d'orbite selon l'axe de la vitesse, autrement dit le maintien à poste en est-ouest.

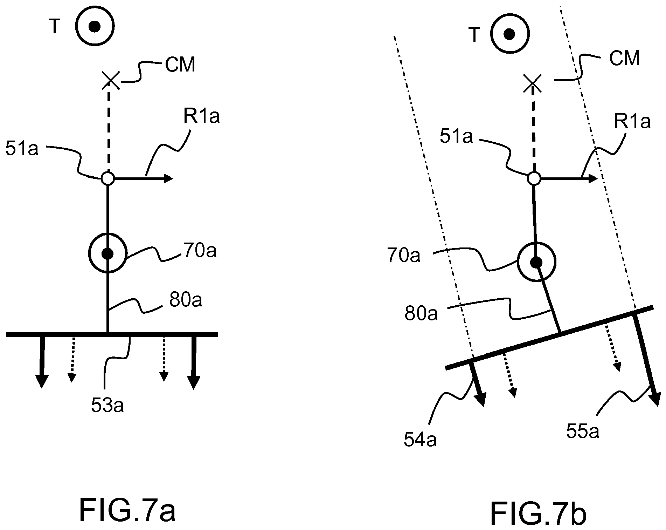

Les figures 7a et 7b représentent un quatrième mode de réalisation du système de propulsion. Le système de propulsion selon ce mode de réalisation se différencie du précédent par l'ajout, pour chacun des modules de propulsion, d'un second bras de déport 80a, entre la seconde liaison motorisée 70a et la platine 53a. Tout comme le mode de réalisation précédent, le degré de liberté en rotation autour de T permet le contrôle d'orbite selon l'axe de la vitesse. L'intérêt de cette variante est qu'elle limite le déséquilibre des poussées de l'allumage différentiel. Plus la seconde liaison motorisée est éloignée de la platine, plus le déséquilibre entre les poussées des propulseurs doit être faible pour générer une force avec une composante selon l'axe V tout en limitant le couple autour de T.

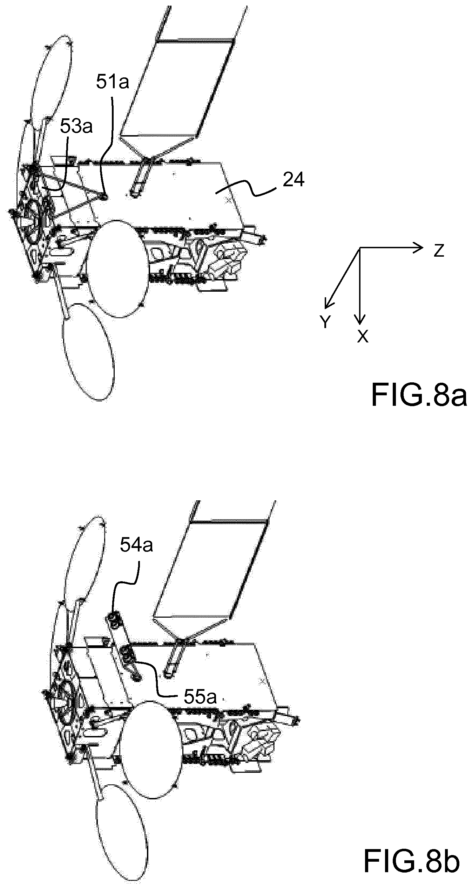

Les figures 8a et 8b illustrent par une vue plus détaillée le second mode de réalisation du système de propulsion respectivement en position de stockage et en position opérationnelle. On retrouve sur ces deux vues l'architecture du système de propulsion décrit par les figures 5a et 5b, et en particulier la liaison motorisée 51a, la platine 53a, les deux propulseurs principaux 54a et 55a, et les deux propulseurs de redondance. Le bras de déport est ici formé de deux branches formant une fourche reliant la liaison motorisée 51a à deux extrémités transversales de la platine 53a. En position de stockage représentée sur la figure 8a, le bras de déport et la platine de chacun des modules de propulsion sont maintenus contre la structure du satellite, sur les faces nord et sud. Ainsi configuré, le système de propulsion présente un encombrement limité. Les quatre propulseurs sont orientés de façon à ce que, en position de stockage, leur axe de poussée soit parallèle à l'axe Z. La position de stockage est donc adaptée au transfert d'orbite sans nécessiter de déplacement préalable du module de propulsion au moyen de la liaison motorisée. En position opérationnelle représentée sur la figure 8b, le module de propulsion est orienté de façon à ce que la force résultante de l'allumage simultané des deux propulseurs principaux (ou des deux propulseurs de redondance) n'exerce pas de couple autour du centre de masse du satellite. Le système de propulsion représenté sur les figures 8a et 8b est particulièrement avantageux. Les modules de propulsion, comprenant une liaison motorisée relativement éloignée de la platine selon l'axe Z, ou autrement dit un bras de déport de longueur en Z relativement importante, permettent, en position opérationnelle, de délivrer une poussée ayant une forte composante en Y. Typiquement, on envisage de positionner la liaison motorisée 51a à proximité du milieu de la face nord selon l'axe Z.

Lors de la conception, il convient de tenir compte de contraintes imposées par les autres constituants du satellite. A titre d'exemple, un module de propulsion trop volumineux, ou positionné trop près des générateurs solaires est susceptible de réduire l'efficacité des générateurs solaires par ombrage, lors du transfert d'orbite ou lors du maintien à poste. En outre, l'allumage des propulseurs peut entrainer une érosion ou une contamination des équipements (réflecteurs d'antennes, générateurs solaires) s'ils sont disposés trop près de ces équipements.

## Revendications

1. Système de propulsion pour le contrôle d'orbite d'un satellite (10) à orbite terrestre (11) animé d'une vitesse de déplacement selon un axe V tangentiel à l'orbite (11),
**caractérisé en ce qu'**il comprend deux modules de propulsion (50a ; 50b), fixés au satellite (10), et en regard l'un de l'autre par rapport au plan de l'orbite (11),
chacun des modules de propulsion (50a) comprenant successivement :
- une liaison motorisée (51a) de rotation autour d'un axe (R1a) parallèle à l'axe V,
- un bras de déport (52a), et
- une platine (53a) supportant deux propulseurs (54a, 55a), chacun des deux propulseurs étant apte à délivrer une poussée selon un axe de poussée du propulseur, disposés sur la platine (53a) de part et d'autre d'un plan P perpendiculaire à l'axe V passant par un centre de masse CM du satellite (10); chacun des deux propulseurs (54a, 55a) étant orienté de façon à ce que les axes de poussée des deux propulseurs (54a, 55a) soient parallèles entre eux et perpendiculaires à l'axe V.

2. Système de propulsion selon la revendication 1, dans lequel les deux propulseurs de chacun des modules de propulsion, sont disposés sur la platine sensiblement à égales distances du plan P.

3. Système de propulsion selon la revendication 1 ou 2, dans lequel chacun des deux modules de propulsion (50a), comprend un propulseur de redondance (56a ; 57a) disposé sur la platine (53a) à proximité du propulseur (54a ; 55a) dudit module de propulsion, et de façon à ce que son axe de poussée soit contenu dans un plan parallèle au plan P et contenant l'axe de poussée dudit propulseur dudit module de propulsion.

4. Système de propulsion selon la revendication 1 ou 2, dans lequel chacun chacun des deux modules de propulsion (50a) comprend un propulseur de redondance (56a ; 57a) disposé sur la platine (53a) à proximité dudit propulseur(54a ; 55a) dudit module de propulstion, et de façon à ce que son axe de poussée soit contenu dans un plan contenant les axes de poussée des deux propulseurs(54a, 55a).

5. Système de propulsion selon l'une des revendications précédentes, dans lequel la liaison motorisée (51a) de chacun des deux modules de propulsion (50a, 50b) permet la rotation de la platine (53a) entre :
- une position de stockage, adaptée au lancement du satellite (10); le bras de déport (52a) dudit module de propulsion (50a) étant maintenu contre le satellite (10), et
- une position opérationnelle, configurée de façon à ce que le plan contenant les axes de poussées des deux propulseurs (54a, 55a) dudit module de propulsion (50a) passe à proximité du centre de masse CM du satellite.

6. Système de propulsion selon l'une des revendications précédentes, dans lequel chacun des deux modules de propulsion (50a, 50b) comprend également, entre le bras de déport (52a) et la platine (53a) dudit module de propulsion (50a), une seconde liaison motorisée (70a) de rotation autour d'un axe T perpendiculaire à la fois à l'axe V et aux axes de poussée des deux propulseurs (54a, 55a) dudit module de propulsion (50a).

7. Système de propulsion selon la revendication 6, dans lequel chacun des deux modules de propulsion (50a, 50b) comprend également, entre la seconde liaison motorisée (70a) et la platine (53a), un second bras de déport (80a).

8. Système de propulsion selon l'une quelconque des revendications 1 à 5, dans lequel chacun des deux modules de propulsion comprend une unique liaison motorisée de rotation autour d'un axe de rotation, l'axe de rotation étant parallèle à l'axe V.

9. Système de propulsion selon l'une quelconque des revendications 1 à 8, dans lequel les deux propulseurs de chacun des deux modules de propulsion sont aptes à être activés simultanément.

10. Satellite à orbite terrestre muni d'un système de propulsion selon l'une des revendications 1 à 9.

11. Procédé de contrôle d'inclinaison pour un satellite en orbite géostationnaire comprenant un système de propulsion selon l'une des revendications 1 à 9, **caractérisé en ce qu'**il comprend des étapes consistant à :
- déplacer un premier module de propulsion (50a), au moyen de sa liaison motorisée (51a), de façon à ce que le plan contenant les axes de poussées de ses deux propulseurs (54a, 55a) passe à proximité du centre de masse CM du satellite,
- activer simultanément les deux propulseurs (54a, 55a) dudit premier module de propulsion (50a) à proximité d'un premier noeud orbital (15),
- déplacer le second module de propulsion (50b), au moyen de sa liaison motorisée (51b), de façon à ce que le plan contenant les axes de poussées de ses deux propulseurs passe à proximité du centre de masse CM du satellite,
- activer simultanément les deux propulseurs dudit second module de propulsion (50b) à proximité d'un second noeud orbital (16), opposé au premier noeud orbital (15).

12. Procédé de transfert d'orbite pour un satellite comprenant un système de propulsion selon l'une des revendications 1 à 9, **caractérisé en ce qu'**il comprend des étapes consistant à :
- pour chacun des deux modules de propulsion (50a, 50b), orienter les propulseurs (54a, 55a), au moyen de la liaison motorisée (51a), de façon à ce que le plan contenant les axes de poussées des propulseurs (54a, 55a) soit parallèle au plan de l'orbite,
- activer simultanément les propulseurs (54a, 55a) des deux modules de propulsion (50a, 50b).

13. Procédé de contrôle de moment cinétique d'un satellite comprenant un dispositif d'accumulation de moment cinétique et un système de propulsion selon l'une des revendications 1 à 9, **caractérisé en ce qu'**il comprend des étapes consistant à :
- orienter les propulseurs (54a, 54b) des deux modules de propulsion (50a, 50b) d'au moins un ensemble de propulsion (100) au moyen de leur liaison motorisée (51a) dans une même position angulaire,
- activer simultanément les deux propulseurs (54a, 54b) ainsi orientés, de manière à générer sur le satellite un couple autour de l'axe V.

14. Procédé de contrôle de moment cinétique d'un satellite comprenant un dispositif d'accumulation de moment cinétique et un système de propulsion selon l'une des revendications 1 à 9, **caractérisé en ce qu'**il comprend des étapes consistant à :
- orienter les propulseurs (54a, 55a) d'au moins un module de propulsion (50a) au moyen de la liaison motorisée (51a) dudit module de propulsion (50a),
- activer les deux propulseurs (54a, 55a) dudit module de propulsion (50a) de manière différentielle, en intensité ou en durée, de manière à générer sur le satellite (10) un couple autour de l'axe perpendiculaire à la fois à l'axe V et aux deux axes de poussée des deux propulseurs (54a , 55a),
le couple ainsi généré limitant ou résorbant le moment cinétique absorbé par le dispositif d'accumulation de moment cinétique du satellite (10).

15. Procédé de contrôle de moment cinétique d'un satellite comprenant un dispositif d'accumulation de moment cinétique et un système de propulsion selon l'une des revendications 1 à 9, **caractérisé en ce qu'**il comprend des étapes consistant à :
- orienter les propulseurs (54a, 55a) d'au moins un module de propulsion (50a) au moyen de la liaison motorisée (51a) et/ou (70a) dudit module de propulsion (50a),
- activer les deux propulseurs (54a, 55a) dudit module de propulsion (50a) de manière différentielle, en intensité ou en durée, de manière à générer sur le satellite (10) un couple autour de l'axe perpendiculaire à la fois à l'axe V et aux deux axes de poussée des deux propulseurs (54a , 55a),
le couple ainsi généré limitant ou résorbant le moment cinétique absorbé par le dispositif d'accumulation de moment cinétique du satellite (10),
et la force selon l'axe X contribuant à contrôler le mouvement du satellite dans le plan de son orbite

## Patentansprüche

1. Antriebssystem zum Steuern des Orbits eines Satelliten (10) in einem Erdorbit (11), der sich mit einer Bewegungsgeschwindigkeit entlang einer Achse V tangential zu dem Orbit (11) bewegt,
**dadurch gekennzeichnet, dass** es zwei Antriebsmodule (50a, 50b) umfasst, die an dem Satelliten (10) befestigt und einander relativ zur Ebene des Orbits (11) zugewandt sind,
wobei jedes der Antriebsmodule (50a) aufeinanderfolgend Folgendes umfasst:
- eine motorisierte Drehverbindung (51a) um eine Achse (R1a) parallel zur Achse V;
- einen Versatzarm (52a); und
- eine Platte (53a), die zwei Triebwerke (54a, 55a) trägt, wobei jedes der Triebwerke zum Liefern eines Schubs entlang einer Schubachse des Triebwerks ausgelegt ist, wobei die Triebwerke auf der Platte (53a) auf beiden Seiten einer Ebene P lotrecht zur Achse V angeordnet sind, die durch einen Massenschwerpunkt CM des Satelliten (10) verläuft, wobei jedes der beiden Triebwerke (54a, 55a) so orientiert ist, dass die Schubachsen der beiden Triebwerke (54a, 55a) parallel zueinander und lotrecht zur Achse V sind.

2. Antriebssystem nach Anspruch 1, wobei die beiden Triebwerke jedes der Antriebsmodule auf der Platte im Wesentlichen in gleichen Abständen von der Ebene P angeordnet sind.

3. Antriebssystem nach Anspruch 1 oder 2, wobei jedes der beiden Antriebsmodule (50a) ein redundantes Triebwerk (56a, 57a) umfasst, das auf der Platte (53a) in der Nähe des Triebwerks (54a, 55a) des Antriebsmoduls angeordnet ist, so dass sich seine Schubachse in einer Ebene befindet, die parallel zur Ebene P ist und die Schubachse des Triebwerks des Antriebsmoduls enthält.

4. Antriebssystem nach Anspruch 1 oder 2, wobei jedes der beiden Antriebsmodule (50a) ein redundantes Triebwerk (56a, 57a) umfasst, das auf der Platte (53a) in der Nähe des Triebwerks (54a, 55a) des Antriebsmoduls angeordnet ist, so dass sich seine Schubachse in einer Ebene befindet, die die Schubachsen der beiden Triebwerke (54a, 55a) enthält.

5. Antriebssystem nach einem der vorherigen Ansprüche, wobei die motorisierte Verbindung (51a) von jedem der beiden Antriebsmodule (50a, 50b) eine Rotation der Platte (53a) zulässt zwischen:
- einer Lagerungsposition für den Abschuss des Satelliten (10), wobei der Versatzarm (52a) des Antriebsmoduls (50a) an dem Satelliten (10) gehalten wird; und
- einer Betriebsposition, so konfiguriert, dass die die Schubachsen der beiden Triebwerke (54a, 55a) des Antriebsmoduls (50a) enthaltende Ebene in der Nähe des Massenschwerpunkts CM des Satelliten passiert.

6. Antriebssystem nach einem der vorherigen Ansprüche, wobei jedes der beiden Antriebsmodule (50a, 50b) ferner, zwischen dem Versatzarm (52a) und der Platte (53a) des Antriebsmoduls (50a), eine zweite motorisierte Verbindung (70a) umfasst, die um eine Achse T lotrecht sowohl zur Achse V als auch zu den Schubachsen der beiden Triebwerke (54a, 55a) des Antriebsmoduls (50a) rotiert.

7. Antriebsmodul nach Anspruch 6, wobei jedes der beiden Antriebsmodule (50a, 50b) auch einen zweiten Versatzarm (80a) zwischen der zweiten motorisierten Verbindung (70a) und der Platte (53a) umfasst.

8. Antriebssystem nach einem der Ansprüche 1 bis 5, wobei jedes der beiden Antriebsmodule eine einzelne motorisierte Verbindung umfasst, die um eine Rotationsachse rotiert, wobei die Rotationsachse parallel zur Achse V ist.

9. Antriebssystem nach einem der Ansprüche 1 bis 8, wobei die beiden Triebwerke jedes der beiden Antriebsmodule zum gleichzeitigen Aktivieren ausgelegt sind.

10. Erdorbitsatellit, der mit einem Antriebssystem nach einem der Ansprüche 1 bis 9 ausgestattet ist.

11. Neigungssteuerverfahren für einen Satelliten in einem geostationären Orbit, umfassend ein Antriebssystem nach einem der Ansprüche 1 bis 9, **dadurch gekennzeichnet, dass** es die folgenden Schritte beinhaltet:
- Bewegen eines ersten Antriebsmoduls (50a), mittels einer motorisierten Verbindung (51a), so dass die die Schubachsen seiner beiden Triebwerke (54a, 55a) enthaltende Ebene in der Nähe des Massenschwerpunkts CM des Satelliten passiert;
- gleichzeitiges Aktivieren der beiden Triebwerke (54a, 55a) des ersten Antriebsmoduls (50a) in der Nähe eines ersten Orbitalknotens (15);
- Bewegen des zweiten Antriebsmoduls (50b) mittels seiner motorisierten Verbindung (51b), so dass die die Schubachsen seiner beiden Triebwerke enthaltende Ebene in der Nähe des Massenschwerpunkts CM des Satelliten passiert;
- gleichzeitiges Aktivieren der beiden Triebwerke des zweiten Antriebsmoduls (50b) in der Nähe eines zweiten Orbitalknotens (16) gegenüber dem ersten Orbitalknoten (15).

12. Orbittransferverfahren für einen Satelliten, der ein Antriebssystem nach einem der Ansprüche 1 bis 9 umfasst, **dadurch gekennzeichnet, dass** es die folgenden Schritte beinhaltet:
- Orientieren der Triebwerke (54a, 55a), für jedes der beiden Antriebsmodule (50a, 50b), mittels der motorisierten Verbindung (51a), so dass die die Schubachsen der Triebwerke (54a, 55a) enthaltende Ebene parallel zur Ebene des Orbit ist;
- gleichzeitiges Aktivieren der Triebwerke (54a, 55a) der beiden Antriebsmodule (50a, 50b).

13. Verfahren zum Steuern des Drehimpulses eines Satelliten, umfassend eine Drehimpulsakkumulationsvorrichtung und ein Antriebssystem nach einem der Ansprüche 1 bis 9, **dadurch gekennzeichnet, dass** es die folgenden Schritte beinhaltet:
- Orientieren der Triebwerke (54a, 54b) der beiden Antriebsmodule (50a, 50b) von wenigstens einer Antriebsbaugruppe (100) in derselben Winkelposition mittels ihrer motorisierten Verbindung (51a);
- gleichzeitiges Aktivieren der beiden so orientierten Triebwerke (54a, 54b), um ein Drehmoment auf dem Satelliten um die Achse V zu erzeugen.

14. Verfahren zum Steuern des Drehimpulses eines Satelliten, umfassend eine Drehimpulsakkumulationsvorrichtung und ein Antriebssystem nach einem der Ansprüche 1 bis 9, **dadurch gekennzeichnet, dass** es die folgenden Schritte beinhaltet:
- Orientieren der Triebwerke (54a, 55a) von wenigstens einem Antriebsmodul (50a) mittels der motorisierten Verbindung (51a) des Antriebsmoduls (50a);
- Aktivieren der beiden Triebwerke (54a, 55a) des Antriebsmoduls (50a) auf differentielle Weise, nach Intensität oder nach Dauer, um ein Drehmoment auf dem Satelliten (10) um eine Achse lotrecht sowohl zur Achse V als auch zu den beiden Schubachsen der beiden Triebwerke (54a, 55a) zu erzeugen,
wobei das so erzeugte Drehmoment den von der Drehimpulsakkumulationsvorrichtung des Satelliten (10) absorbierten Drehimpuls begrenzt oder absorbiert.

15. Verfahren zum Steuern des Drehimpulses eines Satelliten, umfassend eine Drehimpulsakkumulationsvorrichtung und ein Antriebssystem nach einem der Ansprüche 1 bis 9, **dadurch gekennzeichnet, dass** es die folgenden Schritte beinhaltet:
- Orientieren der Triebwerke (54a, 55a) von wenigstens einem Antriebsmodul (50a) mittels der motorisierten Verbindung (51a) und/oder (70a) des Antriebsmoduls (50a);
- Aktivieren der beiden Triebwerke (54a, 55a) des Antriebsmoduls (50a) auf differentielle Weise, nach Intensität oder nach Dauer, um ein Drehmoment auf dem Satelliten (10) um die Achse lotrecht sowohl zur Achse V als auch zu den beiden Schubachsen der beiden Triebwerke (54a, 55a) zu erzeugen,
wobei das so erzeugte Drehmoment das von der Drehimpulsakkumulationsvorrichtung des Satelliten (10) absorbierte kinetische Moment begrenzt oder absorbiert und wobei die Kraft entlang der Achse X die Steuerung der Bewegung des Satelliten in der Ebene seines Orbits erleichtert.

## Claims

1. A propulsion system for controlling the orbit of a satellite (10) in an earth orbit (11) moving at a displacement speed along an axis V tangential to the orbit (11),
**characterised in that** it comprises two propulsion modules (50a, 50b) attached to the satellite (10) and facing each other relative to the plane of the orbit (11),
each of the propulsion modules (50a) successively comprising:
- a motorised link (51a) rotating about an axis (R1a) parallel to the axis V;
- an offset arm (52a); and
- a plate (53a) supporting two thrusters (54a, 55a), each of the two thrusters being designed to deliver a thrust along a thrust axis of the thruster, the thrusters being disposed on the plate (53a) either side of a plane P perpendicular to the axis V passing through a centre of mass CM of the satellite (10), each of the two thrusters (54a, 55a) being oriented so that the thrust axes of the two thrusters (54a, 55a) are parallel to each other and are perpendicular to the axis V.

2. The propulsion system according to claim 1, wherein the two thrusters of each of the propulsion modules are disposed on the plate substantially at equal distances from the plane P.

3. The propulsion system according to claim 1 or 2, wherein each of the two propulsion modules (50a) comprises a redundant thruster (56a, 57a) that is disposed on the plate (53a) in the vicinity of the thruster (54a, 55a) of said propulsion module and so that its thrust axis is contained in a plane that is parallel to the plane P and contains the thrust axis of said thruster of said propulsion module.

4. The propulsion system according to claim 1 or 2, wherein each of the two propulsion modules (50a) comprises a redundant thruster (56a, 57a) disposed on the plate (53a) in the vicinity of said thruster (54a, 55a) of said propulsion module and so that its thrust axis is contained in a plane containing the thrust axes of the two thrusters (54a, 55a).

5. The propulsion system according to any one of the preceding claims, wherein the motorised link (51a) of each of the two propulsion modules (50a, 50b) allows the plate (53a) to be rotated between:
- a stowed position adapted for the launch of the satellite (10), the offset arm (52a) of said propulsion module (50a) being held against the satellite (10); and
- an operational position, which is configured so that the plane containing the thrust axes of the two thrusters (54a, 55a) of said propulsion module (50a) passes in the vicinity of the centre of mass CM of the satellite.

6. The propulsion system according to any one of the preceding claims, wherein each of the two propulsion modules (50a, 50b) further comprises, between the offset arm (52a) and the plate (53a) of said propulsion module (50a), a second motorised link (70a) rotating about an axis T perpendicular to both the axis V and to the thrust axes of the two thrusters (54a, 55a) of the propulsion module (50a).

7. The propulsion system according to claim 6, wherein each of the two propulsion modules (50a, 50b) further comprises a second offset arm (80a) between the second motorised link (70a) and the plate (53a).

8. The propulsion system according to any one of claims 1 to 5, wherein each of the two propulsion modules comprises a single motorised link rotating about a rotation axis, the rotation axis being parallel to the axis V.

9. The propulsion system according to any one of claims 1 to 8, wherein the two thrusters of each of the two propulsion modules are designed to be activated simultaneously.

10. An earth orbit satellite provided with a propulsion system according to any one of claims 1 to 9.

11. An incline control method for a satellite in a geostationary orbit comprising a propulsion system according to any one of claims 1 to 9, **characterised in that** it comprises steps comprising:
- moving a first propulsion module (50a), by means of its motorised link (51a), so that the plane containing the thrust axes of its two thrusters (54a, 55a) passes in the vicinity of the centre of mass CM of the satellite;
- simultaneously activating the two thrusters (54a, 55a) of said first propulsion module (50a) in the vicinity of a first orbital node (15);
- moving the second propulsion module (50b) by means of its motorised link (51b) so that the plane containing the thrust axes of its two thrusters passes in the vicinity of the centre of mass CM of the satellite;
- simultaneously activating the two thrusters of said second propulsion module (50b) in the vicinity of a second orbital node (16) opposite the first orbital node (15).

12. An orbit transfer method for a satellite comprising a propulsion system according to any one of claims 1 to 9, **characterised in that** it comprises steps comprising:
- orienting the thrusters (54a, 55a), for each of the two propulsion modules (50a, 50b), by means of the motorised link (51a), so that the plane containing the thrust axes of the thrusters (54a, 55a) is parallel to the plane of the orbit;
- simultaneously activating the thrusters (54a, 55a) of the two propulsion modules (50a, 50b).

13. A method for controlling the kinetic moment of a satellite comprising a kinetic moment accumulation device and a propulsion system according to any one of claims 1 to 9, **characterised in that** it comprises steps comprising:
- orienting the thrusters (54a, 54b) of the two propulsion modules (50a, 50b) of at least one propulsion assembly (100) in the same angular position by means of their motorised link (51a);
- simultaneously activating the two thrusters (54a, 54b) thus oriented, so as to generate a torque on the satellite about the axis V.

14. A method for controlling the kinetic moment of a satellite comprising a kinetic moment accumulation device and a propulsion system according to any one of claims 1 to 9, **characterised in that** it comprises steps comprising:
- orienting the thrusters (54a, 55a) of at least one propulsion module (50a) by means of the motorised link (51a) of said propulsion module (50a);
- activating the two thrusters (54a, 55a) of said propulsion module (50a) in a differential manner, by intensity or by duration, so as to generate a torque on the satellite (10) about the axis perpendicular both to the axis V and to the two thrust axes of the two thrusters (54a, 55a),
the thus generated torque limiting or absorbing the kinetic moment absorbed by the kinetic moment accumulation device of the satellite (10).

15. A method for controlling the kinetic moment of a satellite comprising a kinetic moment accumulation device and a propulsion system according to any one of claims 1 to 9, **characterised in that** it comprises steps comprising:
- orienting the thrusters (54a, 55a) of at least one propulsion module (50a) by means of the motorised link (51a) and/or (70a) of said propulsion module (50a);
- activating the two thrusters (54a, 55a) of said propulsion module (50a) in a differential manner, by intensity or by duration, so as to generate a torque on the satellite (10) about the axis perpendicular both to the axis V and to the two thrust axes of the two thrusters (54a, 55a),
the thus generated torque limiting or absorbing the kinetic moment absorbed by the kinetic moment accumulation device of the satellite (10)
and the force along the axis X facilitating the control of the movement of the satellite in the plane of its orbit.
